# EUROPÄISCHE PATENTANMELDUNG

(11) **EP 2 781 698 A1**
(43) Veröffentlichungstag der Anmeldung: **24.09.2014**
(21) Anmeldenummer: 13160102.3
(22) Anmeldetag: 20.03.2013
(51) Int. Cl.: F01D 17/08, F01D 25/02, F02C 7/057

(54) **Gasturbine und Verfahren zum Betreiben der Gasturbine**

(71) Anmelder: Siemens Aktiengesellschaft, 80333 München (DE)
(72) Erfinder: Engler, Thorsten, 47447 Moers (DE); Gorynski, Markus, 45144 Essen (DE); Gutermuth, Manuel, 45147 Essen (DE); Kreutzer, Philipp, 45147 Essen (DE); Link, Marco, 46049 Oberhausen (DE); Savilius, Nicolas, 45359 Essen (DE); Süselbeck, Kai, 46145 Oberhausen (DE); Tertilt, Marc, 45529 Hattingen (DE)

(57) **Zusammenfassung**

Die Erfindung betrifft eine Gasturbine (13) mit einem Ansaugtrakt (14) und einem einen Verdichterströmungskanal (4) aufweisenden Verdichter (1). Der Verdichter (1) umfasst zudem eine im Verdichterströmungskanal (4) positionierte Vorleitschaufelreihe (3) mit verstellbaren Vorleitschaufeln. Erfindungsgemäß weist die Gasturbine (13) eine Vereisungssensoreinheit (17) mit zumindest einem zwischen einer ersten Verdichterlaufschaufelreihe (5) und einer ersten Verdichterleitschaufelreihe (6) angeordneten Sensor auf. Die erste Verdichterlaufschaufelreihe (5) ist dabei im Verdichterströmungskanal (4) unmittelbar stromabwärts der Vorleitschaufelreihe (3) angeordnet und die erste Verdichterleitschaufelreihe (6) ist unmittelbar stromabwärts der ersten Verdichterlaufschaufelreihe (5) angeordnet.

Zudem wird ein Verfahren (18) beschrieben, bei dem eine drohende Vereisung des Verdichters (1) erkannt und der Verdichter (1) vor dieser bewahrt wird, indem zumindest Vorleitschaufeln der Vorleitschaufelreihe (3) so gestellt werden, dass die Beschleunigung eines Ansaugluftmassenstroms (12) verringert wird.

## Beschreibung

Die vorliegende Erfindung betrifft eine Gasturbine und ein Verfahren zum Betreiben der Gasturbine.

Eine Gasturbine ist eine Verbrennungskraftmaschine. Sie umfasst üblicher Weise einen Verdichter, eine Brennkammer und eine Turbine. Im Betrieb der Gasturbine wird zunächst Luft über eine Beschaufelung einer oder mehrerer Verdichterstufen komprimiert, anschließend in der Brennkammer mit einem gasförmigen oder flüssigen Treibstoff gemischt, gezündet und verbrannt. Zudem wird die Luft zur Kühlung eingesetzt. So entsteht eine Mischung aus Verbrennungsgas und Luft, genannt Heißgas, welches im nachfolgenden Turbinenteil entspannt wird. Dabei wandelt sich thermische in mechanische Energie um. Diese mechanische Energie treibt zunächst den Verdichter an, der verbleibende Anteil wird insbesondere zum Antrieb eines Generators verwendet. Gezeigt ist eine derartige Gasturbine beispielsweise in der EP 2 128 406 B1.

Es ist bekannt, bei Gasturbinen im Teillastbetrieb den Verdichteransaugluftmassenstrom durch die Anstellung variabler Verdichtervorleitschaufeln anzupassen. Dadurch kann bei einer gegebenen maximalen Abgastemperatur ein größtmöglicher Wirkungsgrad erzielt werden. Die zulässige Minimalposition der variablen Verdichtervorleitschaufeln ist dabei unter anderem durch eine Abkühlung der Ansaugluft im Bereich der Vorleitschaufelreihe und/oder der ersten Verdichterlaufschaufelreihe und der damit verbundenen Vereisungsgefahr limitiert. In Abhängigkeit der Feuchte der Ansaugluft kann es durch die Beschleunigung der Strömung stromabwärts der Vorleitschaufelreihe, was zur Abkühlung der Strömung führt, zu einer Vereisung im Verdichter und damit zu einer Beeinträchtigung der Maschinenintegrität und gegebenenfalls zu Maschinenschäden kommen.

Der vorliegenden Erfindung liegt die Aufgabe zugrunde, diese Nachteile zu beheben und eine verbesserte Gasturbine sowie ein Verfahren zum Betreiben dieser Gasturbine bereitzustellen.

Gelöst wird diese Aufgabe mit einer Gasturbine nach Anspruch 1 sowie einem Verfahren nach Anspruch 6. Vorteilhafte Weiterbildungen der Erfindung sind in den Unteransprüchen angegeben und in der Beschreibung beschrieben.

Die erfindungsgemäße Gasturbine umfasst einen Ansaugtrakt und einen einen Verdichterströmungskanal aufweisenden Verdichter. Der Verdichter weist zudem eine im Verdichterströmungskanal positionierte Vorleitschaufelreihe mit verstellbaren Vorleitschaufeln auf. Erfindungsgemäß weist die Gasturbine eine Vereisungssensoreinheit mit zumindest einem zwischen einer ersten Verdichterlaufschaufelreihe und einer ersten Verdichterleitschaufelreihe angeordneten Sensor auf. Die erste Verdichterlaufschaufelreihe ist dabei im Verdichterströmungskanal unmittelbar stromabwärts der Vorleitschaufelreihe angeordnet und die erste Verdichterleitschaufelreihe ist unmittelbar stromabwärts der ersten Verdichterlaufschaufelreihe angeordnet.

Mit dieser Anordnung ist es vorteilhaft ermöglicht, eine nahende Vereisung zu ermitteln. Mit der Information über die nahende Vereisung können die verstellbaren Vorleitschaufeln der Vorleitschaufelreihe dem entgegenwirkend eingestellt werden. So ist es im erfindungsgemäßen Verfahren zum Betreiben der Gasturbine beabsichtigt.

Die erfindungsgemäße Positionierung wenigstens eines Sensors zwischen der ersten Verdichterlaufschaufelreihe und der ersten Verdichterleitschaufelreihe ermöglicht vorteilhaft eine Erfassung von Daten an der Stelle des Verdichterströmungskanals, an dem die statische Temperatur am niedrigsten und somit Vereisungsgefahr am größten ist.

In einer vorteilhaften Ausgestaltung der erfindungsgemäßen Gasturbine ist vorgesehen, dass die Vereisungssensoreinheit zumindest einen Luftfeuchtigkeitssensor aufweist. Zudem umfasst die Vereisungssensoreinheit in dieser Ausgestaltung zumindest einen Drucksensor und einen Temperatursensor, welche beide zwischen der ersten Verdichterlaufschaufelreihe und der ersten Verdichterleitschaufelreihe angeordnet sind.

Aus den Daten der Luftfeuchtigkeit und der Temperatur und des Drucks, insbesondere des statischen Wanddrucks, lässt sich die Vereisungsgefahr ermitteln. Die Sensoren für die Temperatur- und die Druckermittlung sind dabei an der Stelle des Verdichterströmungskanals positioniert, an dem die niedrigsten Temperaturen und die niedrigsten statischen Wanddrücke zu erwarten sind.

In einer vorteilhaften Ausgestaltung der erfindungsgemäßen Gasturbine ist der Luftfeuchtigkeitssensor im Ansaugtrakt angeordnet, damit eine Messung der Luftfeuchte gerätenah erfolgen kann.

In einer weiteren vorteilhaften Ausführung der erfindungsgemäßen Gasturbine umfasst die Vereisungssensoreinheit im Verdichterströmungskanal zwischen der ersten Verdichterlaufschaufelreihe und der ersten Verdichterleitschaufelreihe mehrere entlang eines Umfangs verteilt angeordnete Drucksensoren. Die Drucksensoren sind dabei beispielsweise gleichmäßig zueinander beabstandet.

Damit kann ein Wert für den statischen Wanddruck an mehreren Stellen ermittelt werden. Eine Messung ist damit genauer und verlässlicher möglich. Zudem kann ein Ausfall eines Drucksensors durch die Redundanz ausgeglichen werden.

In einer weiteren vorteilhaften Ausgestaltung der erfindungsgemäßen Gasturbine umfasst die Vereisungssensoreinheit im Verdichterströmungskanal zwischen der ersten Verdichterlaufschaufelreihe und der ersten Verdichterleitschaufelreihe mehrere entlang eines Umfangs verteilt angeordnete Temperatursensoren. Die Temperatursensoren sind dabei beispielsweise gleichmäßig zueinander beabstandet.

Damit kann ein Wert für die Temperatur an mehreren Stellen ermittelt werden. Eine Messung ist damit genauer und verlässlicher möglich. Zudem kann ein Ausfall eines Temperatursensors durch die Redundanz ausgeglichen werden.

Bei dem erfindungsgemäßen Verfahren zum Einstellen einer sich im Betrieb befindlichen Gasturbine, die einen Ansaugluftmassenstrom innerhalb eines Verdichterströmungskanals beschleunigt, werden in einem ersten Schritt eine Luftfeuchtigkeitsermittlung in einem Verdichtereintrittsbereich und/oder im Verdichterströmungskanal sowie eine Druckermittlung im Verdichterströmungskanal und eine Temperaturermittlung im Verdichterströmungskanal vorgenommen. In einem zweiten Schritt wird eine Vereisungsgefahrermittlung vorgenommen. In einem dritten Schritt erfolgt dann eine Schaufeleinstellung in der Weise, dass bei drohender Vereisung zumindest Vorleitschaufeln einer Vorleitschaufelreihe so gestellt werden, dass die Beschleunigung des Ansaugluftmassenstroms verringert wird. Die Druckermittlung und die Temperaturermittlung erfolgen bei dem erfindungsgemäßen Verfahren bevorzugt zwischen der ersten Verdichterlaufschaufelreihe und der ersten Verdichterleitschaufelreihe.

Mit dem erfindungsgemäßen Verfahren kann vorteilhaft einer Vereisung vorgebeugt werden beziehungsweise kann die Gasturbine dichter an der Grenze zur Vereisung betrieben werden. Damit steht ein größerer nutzbarer Verstellbereich der variablen Vorleitschaufeln für den Betrieb der Gasturbine zur Verfügung. Ein effizienterer Betrieb der Gasturbine ist somit im Vergleich zu herkömmlichen Verfahrensweisen möglich.

In einer vorteilhaften Ausgestaltung des erfindungsgemäßen Verfahrens erfolgt die Luftfeuchtigkeitsermittlung in dem Verdichtereintrittsbereich.

In diesem Bereich ist die Strömungsgeschwindigkeit des Luftmassenstroms kleiner als im Verdichterströmungskanal. Eine Luftfeuchtigkeitsmessung ist in diesem Bereich daher günstiger vorzunehmen.

In einer weiteren vorteilhaften Ausgestaltung des erfindungsgemäßen Verfahrens erfolgt in der Luftfeuchtigkeitsermittlung und/oder der Druckermittlung und/oder der Temperaturermittlung eine Ermittlung aus Messwerten mehrerer Sensoren.

Damit wird ein größerer Bereich im Verdichterströmungskanal überwacht. Das Verfahren gewinnt mit dieser Maßnahme an Genauigkeit und Zuverlässigkeit.

Ausführungsbeispiele der Erfindung werden anhand der Zeichnungen und der nachfolgenden Beschreibung näher erläutert. Es zeigen:
- FIG 1: eine erfindungsgemäße Gasturbine,
- FIG 2: einen Verdichter der erfindungsgemäßen Gasturbine und
- FIG 3: ein erfindungsgemäßes Verfahren zum Einstellen der Gasturbine.

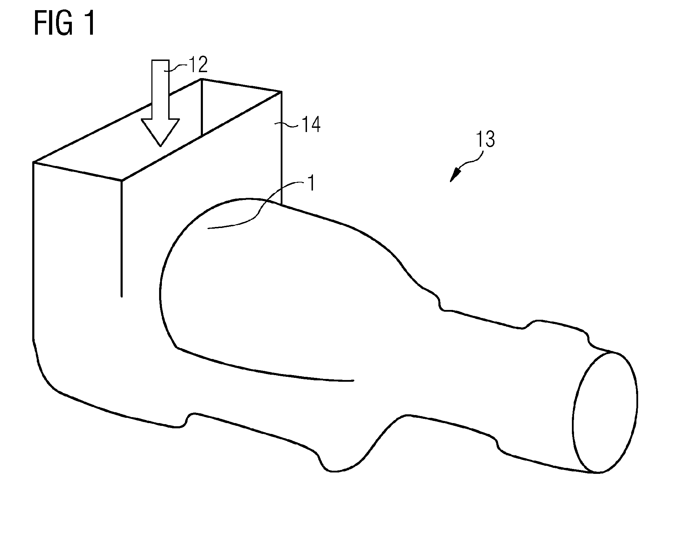

In der FIG 1 ist eine erfindungsgemäße Gasturbine 13 beispielhaft in einer Skizze dargestellt. Die erfindungsgemäße Gasturbine weist einen Ansaugtrakt 14 zur Zuführung von Versorgungsluft auf. Die Versorgungsluft tritt dabei in einem Ansaugluftmassenstrom 12 in die Gasturbine 13 in einen in FIG 1 nicht näher gezeigten Verdichtereintrittsbereich 2. Stromabwärts des Ansaugtrakts 14 ist der Verdichter 1 angeordnet. Wie bei Gasturbinen üblich ist stromabwärts des Verdichters eine hier nicht näher gezeigte Brennkammer angeordnet und stromabwärts dieser Brennkammer ist eine Turbine positioniert.

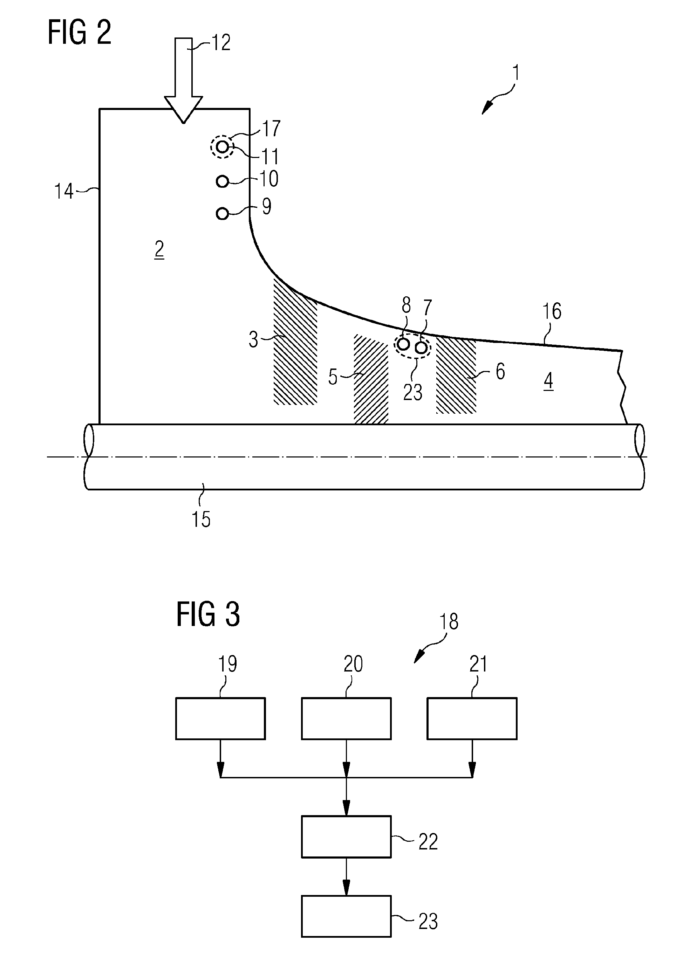

Der Verdichter 1 der erfindungsgemäßen Gasturbine 13 ist beispielhaft in der FIG 2 in einer Schnittdarstellung skizziert.

Im Ansaugtrakt 14 befindet sich der Verdichtereintrittsbereich 2. Im Ansaugtrakt 14 ist beispielsweise zumindest ein Luftfeuchtigkeitssensor 11 zur Messung der Luftfeuchtigkeit angeordnet. Der Luftfeuchtigkeitssensor 11 ist ein erfindungsgemäßer Bestandteil einer Vereisungssensoreinheit 17. Der Luftfeuchtigkeitssensor 11 kann alternativ auch außerhalb des Ansaugtrakts 14 angeordnet sein, beispielsweise vor Lufteintrittsfiltern der Anlage oder in einer benachbarten Wetterstation. Zudem können im Ansaugtrakt 14 zumindest ein Eintrittsdrucksensor 9 und ein Eintrittstemperatursensor 10 platziert sein.

Stromabwärts des Verdichtereintrittsbereichs 2 ist der Verdichter 1 angeordnet. Der Verdichter weist erfindungsgemäß eine Vorleitschaufelreihe 3 mit Vorleitschaufeln auf. Stromabwärts der Vorleitschaufelreihe 3 ist die erste Verdichterlaufschaufelreihe 5 mit Verdichterlaufschaufeln angeordnet. Stromabwärts der ersten Verdichterlaufschaufelreihe 5 ist eine erste Verdichterleitschaufelreihe 6 mit Verdichterleitschaufeln angeordnet. Die erste Verdichterlaufschaufelreihe 5 und die erste Verdichterleitschaufelreihe 6 befinden sich in einem Verdichterströmungskanal 4.

Alle Schaufeln einer Schaufelreihe sind gleichmäßig entlang des Umfangs verteilt an derselben Stelle des Verdichterströmungskanals 4 angeordnet. Sie liegen in einer Reihe. Die Schaufeln der Verdichterlaufschaufelreihe 5 sind an einer Welle 15 befestigt. Die Schaufeln der Verdichterleitschaufelreihe 6 sind an einer Kanalwand 16 des Verdichterströmungskanals 4 befestigt. Stromabwärts der gezeigten Schaufelsätze 5, 6 können weitere hier nicht näher gezeigte Schaufelreihen angeordnet sein.

Zumindest die Vorleitschaufeln sind erfindungsgemäß in ihrem Anstellwinkel verstellbar. Auch weitere Leitschaufelreihen können verstellbar sein. Durch die Verstellbarkeit des Anstellwinkels der Vorleitschaufeln lässt sich der Ansaugluftmassenstrom 12 variieren und damit eine maximal zulässige Turbinenaustrittstemperatur über einen weiten Teillastbereich konstant halten.

Im Verdichterströmungskanal 4 sind erfindungsgemäß weitere Bestandteile der Vereisungssensoreinheit 17 angeordnet. Im Verdichterströmungskanal 4 sind zumindest ein Drucksensor 7 und ein Temperatursensor 8 angeordnet. Der Drucksensor 7 ist dabei ein Sensor für den statischen Wanddruck. Insbesondere sind der zumindest eine Drucksensor 7 und der zumindest eine Temperatursensor 8 stromabwärts der ersten Verdichterlaufschaufelreihe 5 angeordnet. Insbesondere können auch mehrere Druck- und/ oder Temperatursensoren 7 und 8 angeordnet sein, insbesondere entlang eines Umfangs verteilt.

In der FIG 3 ist ein erfindungsgemäßes Verfahren 18 zum Einstellen der Gasturbine 13 beispielhaft in einem Flussdiagramm skizziert. Das Verfahren 18 betrifft insbesondere die Einstellung der variablen Vorleitschaufelreihe 3.

Bei niedrigen Temperaturen und hoher Luftfeuchtigkeit besteht die Gefahr, dass es bei den vorderen Schaufelreihen im Verdichter 1 zu Vereisungen kommt. Am stärksten gefährdet sind die Vorleitschaufelreihe 3 und die erste Verdichterlaufschaufelreihe 5. Durch eine starke Beschleunigung des Ansaugluftmassenstroms 12 stromabwärts der ersten Verdichterlaufschaufelreihe 5 wird der Ansaugluftmassenstrom stark abgekühlt. So könnte es auch bei Eintrittstemperaturen des Ansaugluftmassenstroms 12 von über 0 C° zu Vereisungen kommen. Das erfindungsgemäße Verfahren verhindert eine derartige Vereisung.

In dem erfindungsgemäßen Verfahren 18 werden zunächst mittels der Vereisungssensoreinheit 17 eine Luftfeuchteermittlung 19 und eine Druckermittlung 20 und eine Temperaturermittlung 21 vorgenommen.

Die Luftfeuchtigkeitsermittlung 19 geschieht mit Hilfe des zumindest einen Luftfeuchtigkeitssensors 11. Die Luftfeuchtigkeit wird insbesondere im Ansaugtrakt 14 am Verdichtereintrittsbereich 2 ermittelt 19. Alternativ wird eine Ermittlung 19 der Luftfeuchte auch außerhalb des Ansaugtrakts 14 vorgenommen, beispielsweise vor Lufteintrittsfiltern der Anlage oder in einer benachbarten Wetterstation. Der ermittelte Wert für die Luftfeuchtigkeit kann sich aus mehreren Teilwerten ergeben. Die Teilwerte können aus mehreren Luftfeuchtigkeitssensoren 11 stammen, die im Ansaugtrakt 14 angeordnet sind. Als Wert kann beispielsweise die relative Luftfeuchte ermittelt 19 werden, beispielsweise mittels Feuchtkugeltemperaturmethode.

Die Druckermittlung 20 geschieht mit Hilfe des zumindest einen Drucksensors 7. Der Druck wird im Verdichterströmungskanal 4 des Verdichters 1 ermittelt 20, insbesondere stromabwärts der ersten Verdichterlaufschaufelreihe 5, insbesondere stromaufwärts der ersten Verdichterleitschaufelreihe 6. Der ermittelte Wert für den Druck kann sich aus mehreren Teilwerten ergeben. Die Teilwerte können aus mehreren Drucksensoren 7 stammen, die im Verdichterströmungskanal 4, insbesondere entlang eines Umfangs, angeordnet sind. Es wird bei der Druckermittlung 20 insbesondere der statische Wanddruck ermittelt.

Die Temperaturermittlung 21 geschieht mit Hilfe des zumindest einen Temperatursensors 8. Die Temperatur wird im Verdichterströmungskanal 4 des Verdichters 1 ermittelt 21, insbesondere stromabwärts der ersten Verdichterlaufschaufelreihe 5, insbesondere stromaufwärts der ersten Verdichterleitschaufelreihe 6. Der ermittelte Wert für die Temperatur kann sich aus mehreren Teilwerten ergeben. Die Teilwerte können aus mehreren Temperatursensoren 8 stammen, die im Verdichterströmungskanal 4, insbesondere radial in einer Reihe, angeordnet sind.

Stromabwärts der ersten Verdichterlaufschaufelreihe 5, wo der Ansaugluftmassenstrom 12 sehr schnell beschleunigt wird, sind die Bedingungen für eine Vereisung im Vergleich zu anderen Stellen im Verdichterströmungskanal 4 sehr günstig. Stromabwärts der ersten Verdichterlaufschaufelreihe 5 sind die niedrigste Temperatur und der niedrigste statische Druck zu erwarten.

Aus den erhaltenen Werten für die Luftfeuchtigkeit der Luft im Verdichtereintrittsbereich 2, für den statischen Wanddruck und die Temperatur im Verdichterströmungskanal 4 wird erfindungsgemäß im nächsten Schritt des Verfahrens eine Vereisungsgefahr ermittelt 22. Die Vereisungsgefahr wird insbesondere durch eine Bestimmung des Taupunktabstands ermittelt 22. Der Taupunktabstand ist dabei eine Differenz zwischen der ermittelten Temperatur und einer rechnerisch bestimmten Sublimationstemperatur. Generell steigt die Gefahr der Vereisung mit abnehmender Temperatur, sinkendem Druck und steigender Luftfeuchtigkeit.

In Abhängigkeit der ermittelten Vereisungsgefahr 22 wird dann erfindungsgemäß im nächsten Schritt eine Schaufeleinstellung 23 vorgenommen. Nähert sich die Gasturbine 13 im Betrieb dem Vereisungspunkt, werden die Schaufeln, insbesondere der Vorleitschaufelreihe 3, so gestellt, dass der Ansaugluftmassenstrom 12 weniger stark beschleunigt wird. Initiiert wird die Schaufelverstellung dabei insbesondere dann, wenn der Taupunktabstand einen vordefinierten Sicherheitswert unterschreitet. Es wird erfindungsgemäß die minimal mögliche Position der Vorleischaufelreihe 3 eingestellt, ohne dass es zu Vereisungen kommen kann. Damit wird der nutzbare Verstellbereich der Vorleitschaufeln der Vorleitschaufelreihe 3 bei niedrigen Temperaturen und hoher Luftfeuchtigkeit vergrößert. Das erfindungsgemäße Verfahren 18 wird bevorzugt regelmäßig während des Betriebs der Gasturbine durchgeführt. Gesteuert beziehungsweise geregelt wird das Verfahren 18 insbesondere von einer hier nicht näher gezeigten Steuereinheit. Diese Steuereinheit kann insbesondere eine Hauptkontrolleinheit der Gasturbine sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Gasturbine (13) mit einem Ansaugtrakt (14) und einem einen Verdichterströmungskanal (4) aufweisenden Verdichter (1), wobei der Verdichter (1) eine im Verdichterströmungskanal (4) positionierte Vorleitschaufelreihe (3) mit verstellbaren Vorleitschaufeln aufweist,
**dadurch gekennzeichnet**, das
die Gasturbine (13) eine Vereisungssensoreinheit (17) mit zumindest einem zwischen einer ersten Verdichterlaufschaufelreihe (5) und einer ersten Verdichterleitschaufelreihe (6) angeordneten Sensor aufweist, wobei die erste Verdichterlaufschaufelreihe (5) im Verdichterströmungskanal (4) unmittelbar stromabwärts der Vorleitschaufelreihe (3) und die erste Verdichterleitschaufelreihe (6) unmittelbar stromabwärts der ersten Verdichterlaufschaufelreihe (5) angeordnet sind.

2. Gasturbine (13) nach Anspruch 1,
wobei die Vereisungssensoreinheit (17) zumindest einen Luftfeuchtigkeitssensor (11) aufweist sowie zumindest einen Drucksensor (7) und einen Temperatursensor (8), welche zwischen der ersten Verdichterlaufschaufelreihe (5) und der ersten Verdichterleitschaufelreihe (6) angeordnet sind.

3. Gasturbine (13) nach Anspruch 2,
wobei der Luftfeuchtigkeitssensor (11) im Ansaugtrakt (14) angeordnet ist.

4. Gasturbine (13) nach einem der Ansprüche 1 bis 3, wobei die Vereisungssensoreinheit (17) im Verdichterströmungskanal (4) zwischen der ersten Verdichterlaufschaufelreihe (5) und der ersten Verdichterleitschaufelreihe (6) mehrere entlang eines Umfangs verteilt angeordnete Drucksensoren (7) umfasst.

5. Gasturbine (13) nach einem der Ansprüche 1 bis 4, wobei die Vereisungssensoreinheit (17) im Verdichterströmungskanal (4) zwischen der ersten Verdichterlaufschaufelreihe (5) und der ersten Verdichterleitschaufelreihe (6) mehrere entlang eines Umfangs verteilt angeordnete Temperatursensoren (8) umfasst.

6. Verfahren (18) zum Betreiben einer Gasturbine (13), die einen Ansaugluftmassenstrom (12) innerhalb eines Verdichterströmungskanals (4) eines Verdichters (1) beschleunigt, bei dem in einem ersten Schritt eine Luftfeuchtigkeitsermittlung (19) in einem Verdichtereintrittsbereich (2) und/oder in dem Verdichterströmungskanal (4) sowie eine Druckermittlung (20) in dem Verdichterströmungskanal (4) und eine Temperaturermittlung (21) in dem Verdichterströmungskanal (4) erfolgt,
in einem zweiten Schritt eine Vereisungsgefahrermittlung (22) vorgenommen wird und in einem dritten Schritt in der Weise eine Schaufeleinstellung (23) erfolgt, dass bei drohender Vereisung zumindest Vorleitschaufeln einer Vorleitschaufelreihe (3) so gestellt werden, dass die Beschleunigung des Ansaugluftmassenstroms (12) verringert und dadurch die Vereisung des Verdichters (1) vermieden wird.

7. Verfahren (18) nach Anspruch 6,
bei dem die Luftfeuchtigkeitsermittlung (19) in einem Verdichtereintrittsbereich (2) erfolgt.

8. Verfahren (18) nach Anspruch 6 oder 7,
bei dem in der Luftfeuchtigkeitsermittlung (19) und/oder der Druckermittlung (20) und/oder der Temperaturermittlung (21) eine Ermittlung aus Messwerten mehrerer Sensoren erfolgt.
